(19) **Europäisches Patentamt**

**European Patent Office**

**Office européen des brevets**

(11) **EP 1 113 420 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*G10L 15/18* (2006.01)     *G10L 13/04* (2006.01)
*G10L 19/00* (2006.01)     *G06F 17/27* (2006.01)

(21) Anmeldenummer: **00128630.1**

(22) Anmeldetag: **28.12.2000**

(54) **Verfahren zur Spracherkennung und Kontrolle einer Sprachsyntheseneinheit oder Kommunikationssystem**

Method of speech recognition and of control of a speech synthesis unit or communication system

Procédé de reconnaissance de parole et de commande d'une unité de synthèse de parole ainsi que d'un moyen de communication

(84) Benannte Vertragsstaaten:
**DE FR GB IT**

(30) Priorität: **30.12.1999 DE 19963812**

(43) Veröffentlichungstag der Anmeldung:
**04.07.2001 Patentblatt 2001/27**

(73) Patentinhaber: **Nokia Corporation**
**02150 Espoo (FI)**

(72) Erfinder: **Theimer, Wolfgang**
**44789 Bochum (DE)**

(74) Vertreter: **Becker Kurig Straus**
**Patentanwälte**
**Bavariastrasse 7**
**80336 München (DE)**

(56) Entgegenhaltungen:
**EP-A- 0 372 734     EP-A- 0 889 626**
**EP-A- 1 014 277     US-A- 5 062 143**

**Beschreibung**

Die Erfindung betrifft ein Verfahren zum Erkennen einer Sprache, in der ein als Zeichenfolge vorliegender Text verfaßt ist, sowie ein Verfahren zum Steuern einer Sprachsyntheseeinheit und eine Kommunikationsvorrichtung.

Bei Benutzerschnittstellen von Kommunikationsvorrichtungen, also von in einem Kommunikationsnetz eingesetzten Endgeräten, wie z.B. Mobiltelefonen oder PC's (Personal Computer), die eine Sprachwiedergabeeinheit zur Wiedergabe von Texten aufweisen, ist es erforderlich, daß zur Wiedergabe von Texten, insbesondere zur Wiedergabe von empfangenen Texten oder Nachrichten, wie beispielsweise Kurznachrichten (SMS), e-mails, Verkehrsinformationen und dergleichen, die Sprache des empfangenen Textes bzw. der Nachricht bekannt ist, um den Mitteilungstext korrekt ausgesprochen wiederzugeben.

Um die korrekte Aussprache eines Namens mittels einer Sprachsyntheseeinheit zu ermöglichen, wird in der EP 0 372 734 B1 ein Verfahren zur Erkennung der Sprache eines Namens vorgeschlagen, bei dem ein gesprochen wiederzugebender Name in Buchstabengruppen von je 3 Buchstaben zerlegt wird, für jede der 3-Buchstaben-Gruppen die Wahrscheinlichkeit festgestellt wird, daß die jeweilige 3-Buchstaben-Gruppe zu einer bestimmten Sprache gehört, um dann aus der Summe der Wahrscheinlichkeiten aller 3-Buchstaben-Gruppen die Zugehörigkeit zu einer Sprache oder Sprachgruppe zu ermitteln.

Ähnliche Verfahren zum Einsatz in einer kommunikations-vorrichtung sind aus EP 0 889 626 oder EP 1 014 277 bekannt.

Bei einem bekannten Verfahren (GB 2 318 659 A) zum Erkennen einer Sprache, in der ein Dokument geschrieben ist, werden zunächst die am häufigsten benutzten Worte einer Sprache für jede von einer Vielzahl von zur Verfügung stehenden Sprachen ausgewählt und in jeweiligen Worttabellen der Sprache gespeichert. Um die Sprache eines Dokuments zu erkennen, werden Wörter des Dokuments mit den am häufigsten benutzten Worten der verschiedenen Sprachen verglichen, wobei die Anzahl der Übereinstimmungen gezählt wird. Die Sprache, für die sich die größte Anzahl von Übereinstimmungen beim Wort-für-Wort-Vergleich ergibt, wird dann als Sprache des Dokuments festgestellt.

Bei einem weiteren bekannten Verfahren zum Erkennen einer Sprache auf der Grundlage von 3-Buchstaben-Gruppen (US 5 062 143) wird ein Text so in eine Vielzahl von 3-Buchstaben-Gruppen zerlegt, daß zumindest einige der 3-Buchstaben-Gruppen benachbarte Worte überlappen, also ein Leerzeichen in der Mitte erhalten. Die so erhaltenen 3-Buchstaben-Gruppen werden mit Schlüsselsätzen von 3-Buchstaben-Gruppen verschiedener Sprachen verglichen, um aus dem Verhältnis der mit den 3-Buchstaben-Gruppen eines Schlüsselsatzes übereinstimmenden Buchstaben-Gruppen eines Textes zur Gesamtanzahl der 3-Buchstaben-Gruppen des Textes die Sprache des Textes zu ermitteln.

Der Erfindung liegt die Aufgabe zugrunde, ein weiteres Verfahren zum Erkennen einer Sprache bereitzustellen, das es mit geringem Aufwand ermöglicht, auch bei kurzen Texten die Sprache, in der der Text verfaßt ist, zuverlässig zu erkennen. Darüber hinaus liegt der Erfindung die Aufgabe zugrunde, ein Verfahren zum Steuern einer Sprachsyntheseeinheit sowie eine Kommunikationsvorrichtung bereitzustellen, mit denen eine korrekte Sprachwiedergabe für verschiedene Sprachen mit geringem Aufwand möglich ist.

Diese Aufgabe wird durch die Verfahren nach Anspruch 1 bzw. 13 sowie durch die Kommunikationsvorrichtung nach Anspruch 14. gelöst.

Erfindungsgemäß werden also Häufigkeitsverteilungen von Buchstaben in einem Text ermittelt, dessen Sprache gesucht wird. Diese Häufigkeitsverteilungen werden mit entsprechenden Häufigkeitsverteilungen von verfügbaren Sprachen verglichen, um Ähnlichkeitsfaktoren festzustellen, die anzeigen, inwieweit die ermittelten Häufigkeitsverteilungen mit den Häufigkeitsverteilungen jeder verfügbaren Sprache übereinstimmt. Die Sprache, für die der ermittelte Ähnlichkeitsfaktor am größten ist, wird dann als Sprache des Textes festgestellt. Dabei ist es zweckmäßig, wenn die Feststellung der Sprache nur dann erfolgt, falls der ermittelte größte Ähnlichkeitsfaktor größer als ein Schwellenwert ist.

Erfindungsgemäß wird also die statistische Verteilung von Buchstaben, also von Einzelbuchstaben, 2-Buchstaben- oder Mehr-Buchstaben-Gruppen in einem zu analysierenden Text festgestellt und mit entsprechenden statistischen Verteilungen der jeweils zur Verfügung stehenden Sprachen verglichen. Diese Vorgehensweise benötigt bei der Realisierung verhältnismäßig geringe Rechnerkapazitäten und relativ wenig Speicherplatz.

Erfindungsgemäß ist weiter vorgesehen, daß die Länge des Textes festgestellt wird und in Abhängigkeit von der Länge des Textes eine, zwei oder mehrere Häufigkeitsverteilungen von Buchstaben und Buchstabengruppen im Text ermittelt werden, wobei die Länge des Textes als Anzahl der Buchstaben im Text festgestellt wird und die Anzahl der Buchstaben im Text mit der Anzahl der Buchstaben in einem Alphabet verglichen wird, um zu bestimmen, welche Häufigkeitsverteilungen ermittelt werden.

Auf diese Weise läßt sich der Rechenaufwand beim Ermitteln der Häufigkeitsverteilung oder Häufigkeitsverteilungen sowie beim nachfolgenden Vergleich der Häufigkeitsverteilungen zum Feststellen von Ähnlichkeitsfaktoren reduzieren, ohne daß die Zuverlässigkeit der Spracherkennung wesentlich beeinträchtigt wird, da jeweils nur die Ermittlung von solchen Häufigkeitsverteilungen weggelassen wird, deren statistische Aussagekraft nur äußerst gering wäre.

Insbesondere ist es zweckmäßig, daß die Häufigkeitsverteilungen von Buchstabengruppen mit drei Buchstaben, von Buchstabengruppen mit zwei Buchstaben und von Einzelbuchstaben ermittelt werden, wenn die Anzahl der Buchstaben im Text größer als das Quadrat der Anzahl der Buchstaben im Alphabet ist. Ist also die Anzahl der Buchstaben im Text sehr groß, so ist es vorteilhaft, wenn neben den Häufigkeitsverteilungen von Einzelbuchstaben und von 2-Buchstaben-Gruppen auch die Häufigkeitsverteilung von 3-Buchstaben-Gruppen ermittelt wird, wodurch die statistische Zuverlässigkeit der Gesamtaussage deutlich erhöht wird.

Bei einer verringerten Buchstabenanzahl im Text, die größer als die Anzahl der Buchstaben im Alphabet aber kleiner als deren Quadrat ist, werden die Häufigkeitsverteilungen von Buchstaben-Gruppen mit 2 Buchstaben und von Einzelbuchstaben ermittelt. Falls die Anzahl der Buchstaben im Text kleiner als die Anzahl der Buchstaben im Alphabet ist, wird zweckmäßigerweise nur noch die Häufigkeitsverteilung von Einzelbuchstaben ermittelt, da die statistische Aussagekraft der Häufigkeitsverteilungen von Buchstabengruppen in dem erfindungsgemäßen Auswerteverfahren dann praktisch nicht mehr gesichert ist.

Bei einer vorteilhaften Ausgestaltung der Erfindung ist vorgesehen, daß die ermittelte Häufigkeitsverteilung als Häufigkeitsverteilung einer neuen Sprache gespeichert oder einer entsprechenden Häufigkeitsverteilung einer Sprache hinzugefügt wird, wenn aufAnfrage eine Sprache angegeben wird, der die ermittelte Häufigkeitsverteilung zuzuordnen ist. Auf diese Weise wird es ermöglicht, in einem Selbstlernprozeß Häufigkeitsverteilungen für weitere Sprachen zu erzeugen oder, falls bereits eine Häufigkeitsverteilung für diese Sprache gespeichert ist, deren statistische Zuverlässigkeit zu vergrößern.

Bei einer vorteilhaften Ausgestaltung der Erfindung kann vorgesehen sein, daß die ermittelte Häufigkeitsverteilung zu der entsprechenden Häufigkeitsverteilung der festgestellten Sprache hinzugefügt wird. Hierdurch läßt sich die statistische Zuverlässigkeit von gespeicherten Häufigkeitsverteilungen verfügbarer Sprachen automatisch weiter verbessern, ohne daß der Benutzer einzugreifen braucht.

Um die Verarbeitung des Textes bei der Ermittlung der Häufigkeitsverteilung von Buchtaben und Buchstaben-Gruppen im Text zu erleichtern, ist bei einer vorteilhaften Ausgestaltung der Erfindung vorgesehen, daß aus der Zeichenfolge des Textes bis auf Leerzeichen alle Nicht-Buchstabenzeichen entfernt werden, um aus der so erhaltenen Zeichenfolge Häufigkeitsverteilungen von Buchstaben und Buchstabengruppen im Text zu ermitteln.

Eine besonders zweckmäßige Ausgestaltung der Erfindung zeichnet sich dadurch aus, daß ein Gesamtalphabet verwendet wird, das auch auf lateinischen Buchstaben basierende Sonderbuchstaben verschiedener Sprachen enthält. Die Verwendung eines Gesamtalphabets, also eines Alphabets das neben den lateinischen Buchstaben, die allen lateinischen Buchstaben benutzenden Sprachen gemeinsam sind, auch die auf lateinischen Buchstaben basierenden Sonderbuchstaben, wie z.B. ä, ö, ü im Deutschen, é.ç im Französischen oder å im Schwedischen enthält, läßt sich jeder zu analysierende Text in der gleichen Weise verarbeiten, ohne daß vorab eine Untersuchung der Buchstaben auf Sonderbuchstaben stattfinden müßte, um das entsprechende Alphabet zu wählen. Hierdurch läßt sich also eine wesentliche Vereinfachung des erfindungsgemäßen Verfahrens erreichen.

Um die Erkennung der Sprache, in der der Text verfaßt ist, zu beschleunigen, ist es zweckmäßig, wenn die im Text vorhandenen Buchstaben auf Sonderbuchstaben untersucht werden, um je nach dem Vorhandensein oder dem Nichtvorhandensein von für bestimmte Sprachen charakteristischen Sonderbuchstaben die Sprachen auszuwählen, die beim Vergleich der ermittelten Häufigkeitsverteilung mit entsprechenden Häufigkeitsverteilungen von verfügbaren Sprachen zu berücksichtigen sind.

Darüber hinaus kann vorgesehen sein, daß nach dem Feststellen der Sprache, die im Text vorhandenen Buchstaben auf Sonderbuchstaben untersucht werden, die für die festgestellte Sprache und für nicht festgestellte Sprachen charakteristisch sind, um die festgestellte Sprache zu bestätigen. Durch den Vergleich von im zu analysierenden Text vorliegenden Sonderbuchstaben mit den Sonderbuchstaben einer festgestellten Sprache läßt sich auf einfache Weise feststellen, inwieweit die für den Text festgestellte Sprache für diesen plausibel ist.

Besonders zweckmäßig läßt sich das erfindungsgemäße Verfahren zum Erkennen einer Sprache in einem Verfahren zum Steuern einer Sprachsyntheseeinheit einsetzen, bei dem die bei der erfindungsgemäßen Spracherkennung festgestellte Sprache an eine Sprachsyntheseeinheit übertragen wird, in der die Ausspracheregeln der festgestellten Sprache ausgewählt und für die synthetische Sprachwiedergabe des Textes von einem Sprachsynthesemodul der Sprachwiedergabeeinheit verwendet werden.

Bei einer erfindungsgemäßen Kommunikationsvorrichtung, die neben einem Empfangsmodul und einem Sprachsynthesemodul ein Spracherkennungsmodul aufweist, ist vorgesehen, daß ein vom Sprachsynthesemodul auszugebender Text dem Spracherkennungsmodul zum Erkennen der Sprache, in der der auszugebende Text verfaßt ist, zuführbar ist und daß das Spracherkennungsmodul zum Übertragen einer für diesen Text festgestellten Sprache mit dem Sprachsynthesemodul verbunden ist.

Zweckmäßigerweise ist dabei vorgesehen, daß in dem Sprachsynthesemodul Ausspracheregeln für verschiedene Sprachen gespeichert sind, wobei im Sprachsynthesemodul ein Ausspracheregel-Auswahlkreis vorgesehen ist, der mit dem Spracherkennungsmodul verbunden ist und in Abhängigkeit von der vom Spracherkennungsmodul übertragenen Sprache die entsprechende Ausspracheregel auswählt, so daß diese von einer Sprachsyntheseeinheit des Sprachsynthesemoduls verwendet werden kann.

Um in der erfindungsgemäßen Kommunikationsvorrichtung eine Spracherkennung einfach und effektiv durchführen zu können, ist vorgesehen, daß das Spracherkennungsmodul einen Filterkreis umfaßt, um aus einer Zeichenfolge eines Textes bis auf Leerzeichen alle Nicht-Buchstabenzeichen zu entfernen.

Weiter ist es zweckmäßig, wenn das Spracherkennungsmodul einen Statistikkreis umfaßt, um eine Häufigkeitsverteilung von Buchstaben im Text zu ermitteln, wobei der Statistikkreis erste, zweite und dritte Rechenkreise aufweist, um Häufigkeitsverteilungen von Einzelbuchstaben, von Buchstabengruppen mit zwei Buchstaben bzw. von Buchstabengruppen mit drei Buchstaben zu ermitteln.

Eine zweckmäßige Ausgestaltung der Erfindung zeichnet sich dadurch aus, daß das Spracherkennungsmodul einen Vergleicherkreis aufweist, um zur Ermittelung von Ähnlichkeitsfaktoren für einen Text ermittelte Häufigkeitsverteilungen von Buchstaben mit entsprechenden gespeicherten Häufigkeitsverteilungen verfügbarer Sprachen zu vergleichen, wobei das Spracherkennungsmodul einen Auswertekreis umfaßt, dem die Ähnlichkeitsfaktoren vom Vergleicherkreis zuführbar sind, um die Sprache als Sprache des Textes festzustellen, für die der ermittelte Ähnlichkeitsfaktor am größten ist.

Die Erfindung wird im folgenden beispielsweise anhand der Zeichnung näher erläutert. Es zeigen:

Figur 1, ein vereinfachtes, schematisches Blockschaltbild einer Kommunikationsvorrichtung,

Figur 2, ein vereinfachtes, schematisches Blockschaltbild einer Sprachwiedergabeeinheit der Kommunikationsvorrichtung aus Figur 1,

Figur 3, ein vereinfachtes, schematisches Blockschaltbild eines Spracherkennungsmoduls der Kommunikationsvorrichtung aus Figur 1 und

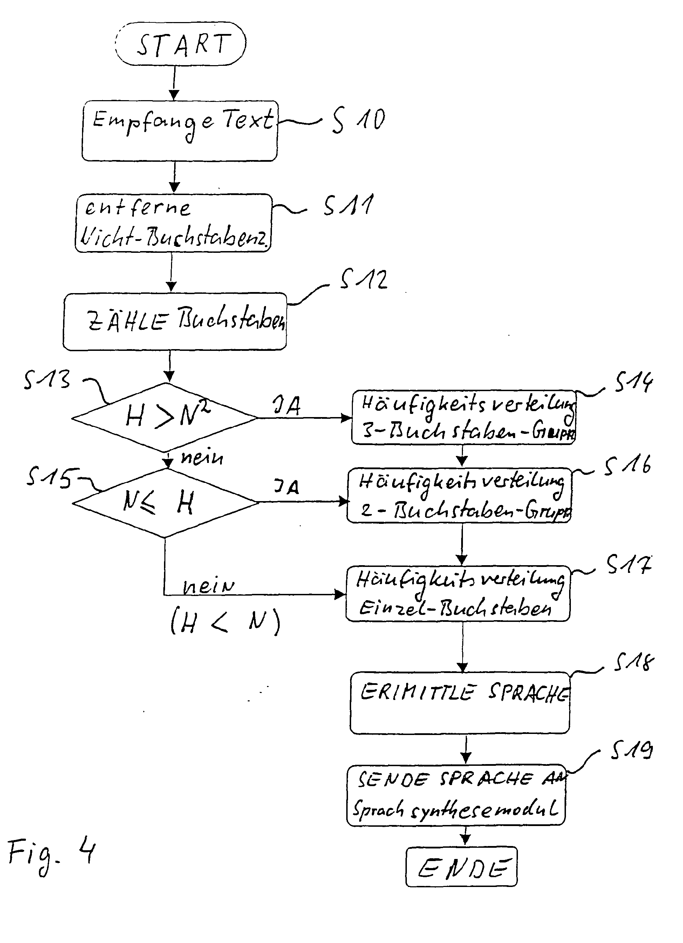

Figur 4, ein vereinfachtes Flußdiagramm zur Veranschaulichung des erfindungsgemäßen Verfahrens zum Erkennen einer Sprache.

In den verschiedenen Figuren der Zeichnung sind einander entsprechende Elemente mit gleichen Bezugszeichen versehen.

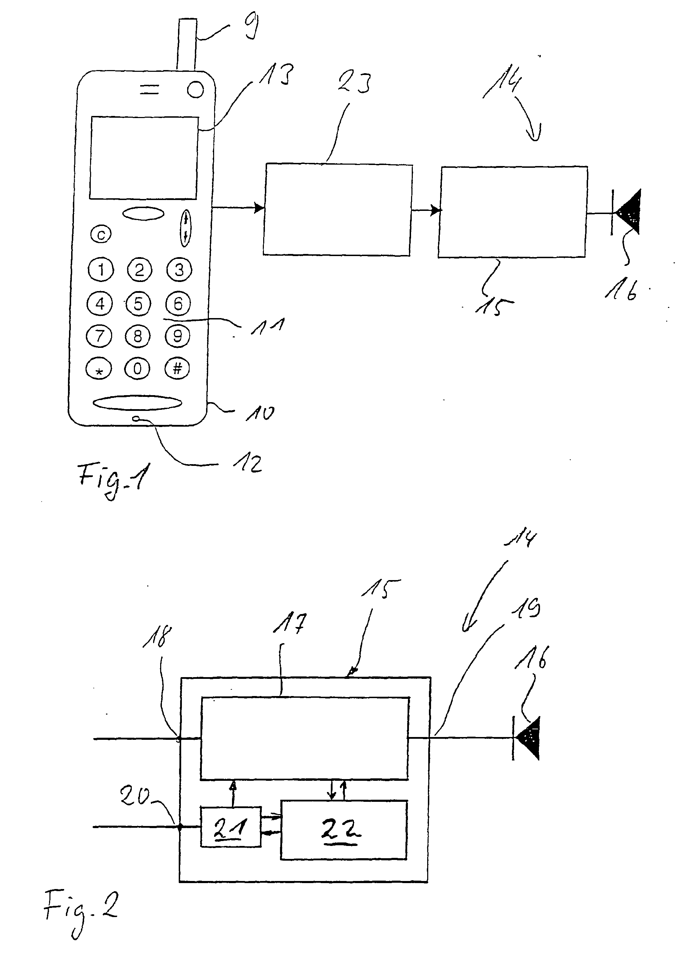

Wie Figur 1 zeigt, weist eine erfindungsgemäße Kommunikationsvorrichtung als Empfangsmodul beispielsweise ein Mobiltelefon 10 mit einer nicht näher dargestellten zentralen Steuereinheit und einer Benutzerschnittstelle auf, die ein Tastenfeld 11, ein Mikrofon 12, eine optische Anzeigevorrichtung 13 und eine Sprachwiedergabeeinheit 14 umfaßt. Die Sprachwiedergabeeinheit 14 setzt sich aus einem Sprachsynthesemodul 15 und einem als Sprachausgabeeinheit dienenden Lautsprecher 16 zusammen.

Wie in Figur 2 dargestellt ist, ist in dem Sprachsynthesemodul 15 eine Sprachsyntheseeinheit 17 vorgesehen, an deren Eingang 18 ein gesprochen wiederzugebender Text zugeführt wird, während ein Sprachausgabeausgang 19 mit dem Lautsprecher 16 verbunden ist. Ein Steuersignaleingang 20, über den ein die Sprache des wiederzugebenden Textes anzeigendes Sprachauswahlsignal dem Sprachsynthesemodul 15 zuführbar ist, ist an einen Ausspracheregel-Auswahlkreis 21 geführt. In einem Speicher 22 sind Aussprachregeln für verschiedene Sprachen, also beispielsweise für Deutsch, Englisch, Finnisch, Französisch, usw. abgelegt.

Mit Hilfe des Ausspracheregel-Auswahlkreises 21 werden der Sprachsyntheseeinheit 17 die jeweils benötigten Aussprachregeln aus dem Speicher 22 zur Verfügung gestellt. Hierzu ist es einerseits möglich, daß der Ausprachregel-Auswahlkreis 21 in Abhängigkeit vom anliegenden Sprachauswahlsignal die entsprechenden Ausspracheregeln aus dem Speicher 22 liest und an die Sprachsyntheseeinheit 17 überträgt. Andererseits kann auch vorgesehen sein, daß der Ausspracheregel-Auswahlkreis 21 nur diejenigen Speicheradressen an die Sprachsyntheseeinheit 17 überträgt, unter denen die entsprechenden Aussprachregeln gespeichert sind, so daß die Sprachsyntheseeinheit 17 die entsprechenden Aussprachregeln selbst im Speicher 22 liest.

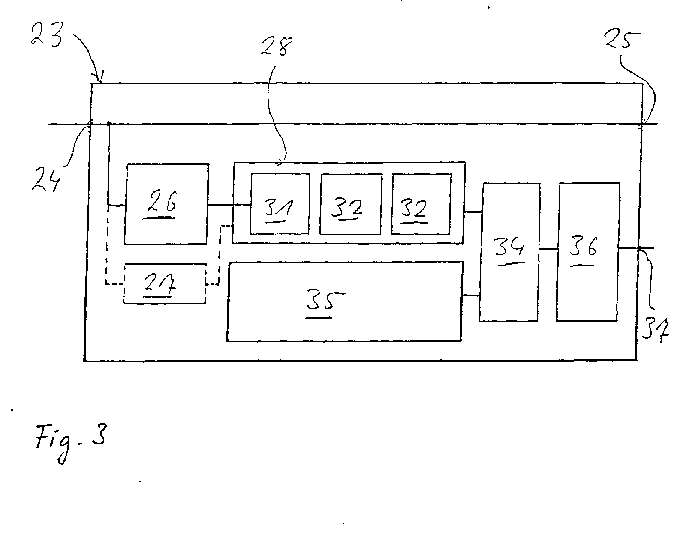

Zwischen der zentralen Steuereinheit des Empfangsmoduls zum Empfangen, Bearbeiten und Verwalten von Informationen, also dem Mobiltelefon 10 und der Sprachwiedereingabeeinheit 14 ist ein Spracherkennungsmodul 23 angeordnet, das, wie in Figur 3 schematisch dargestellt ist, einen Eingang 24 zum Empfangen eines gesprochen wiederzugebend Textes aufweist. Der Eingang 24 ist direkt oder auch über eine Verzögerungsleitung oder einen Pufferspeicher mit einem Ausgang 25 verbunden, der an den Eingang 18 der Sprachsyntheseeinheit 17 angeschlossen ist. Außerdem ist der Eingang 24 an einen Filterkreis 26 geführt, in dem aus einer Zeichenfolge eines Textes bis auf Leerzeichen alle Nicht-Buchstabenzeichen entfernt werden. Der Filterkreis 26 kann dabei gleichzeitig als Zähler dienen. Es ist jedoch auch möglich, daß ein Zähler 27 vorgesehen ist, um die Anzahl H von Buchstaben in einem Text zu ermitteln.

An den Filterkreis 26 ist ein Statistikkreis 28 angeschlossen, um Häufigkeitsverteilungen $h_1(x)$, $h_2(x, y)$, $h_3(x, y, z)$ zu ermitteln. Der Statistikkreis 28 weist dazu zweckmäßigerweise erste, zweite und dritte Rechenkreise 31, 32, 33 auf, um eine Häufigkeitsverteilung $h_1(x)$ von Einzelbuchstaben, eine Häufigkeitsverteilung $h_2(x, y)$ von 2-Buchstaben-Gruppen und einer Häufigkeitsverteilung $h_3(x,y,z)$ von 3-Buchstaben-Gruppen zu ermitteln.

Die in dem Statistikkreis 28 ermittelten Häufigkeitsverteilungen $h_1$, $h_2$, $h_3$ werden einem Vergleicherkreis 34 zugeführt, dem auch Häufigkeitsverteilungen $1_1(x)$, $1_2(x, y)$, $1_3(x, y, z)$ von Einzelbuchstaben, 2-Buchstaben-Gruppen und 3-Buchstaben-Gruppen verfügbarer Sprachen zugeführt werden, die in einem Statistikspeicher 35 gespeichert sind. Vom Vergleicherkreis 34 ermittelte Ähnlichkeitsfaktoren $s_1$, $s_2$, $s_3$, werden einem Auswertekreis 36 zugeführt, der aus den Ähnlichkeitsfaktoren $s_1$, $s_2$, $s_3$ die Sprache des Textes feststellt. Ein Ausgang 37 des Auswertekreis 36 ist mit dem Steuersignaleingang 20 des Sprachsynthesemoduls 15 verbunden, um diesem ein Sprachauswahlsignal zuzuführen.

Sobald das Mobiltelefon 10 über seine als Antenne 9 angedeutete Luftschnittstelle zum Mobilfunknetz eine Nachricht, z.B. eine Kurznachricht, ein e-mail, oder Verkehrsinformationen, empfängt, die als gesprochener Text über die Sprachwiedergabeeinheit 14 ausgegeben werden soll, wird der als Zeichenfolge vorliegende Text an das Spracherkennungsmodul 23 übertragen, das diesen somit in Schritt S10 empfängt.

Bevor der in Schritt S10 empfangene Text einer statistischen Analyse unterzogen wird, werden im Schritt S 11 aus der Zeichenfolge des vorliegenden Textes alle Nicht-Buchstabenzeichen, wie z.B. Ziffern, Satzzeichen, Zeilenschaltzeichen und andere Spezialzeichen entfernt. Dabei werden lediglich Leerzeichen in der Zeichenfolge belassen, die die Trennung einzelner Worte anzeigen. Überschüssige Leerzeichen werden jedoch ebenfalls entfernt.

Liegt beispielsweise der folgende Text vor:

"Dies.ist.ein.Satzbeispiel,....das.zeigen.soll....wie.die.Buchstabenstatistiken.im.einzelnen.berechnet.werden !"

(Hier repräsentiert das Zeichen "." jeweils ein Leerzeichen, um die Darstellung der Leerzeichen zu verdeutlichen.) So ergibt sich nach dem Entfernen der Nicht-Buchstabenzeichen und der überschüssigen Leerzeichen die folgende Zeichenfolge:

".Dies.ist.ein.Satzbeispiel.das.zeigen.soll.wie.die.Buchstabenstatistiken.im.einzelnen.berechnet.werden."

Zum Entfernen der Nicht-Buchstabenzeichen und der überschüssigen Leerzeichen wird im Schritt S11, der vorzugsweise im Filterkreis 26 ausgeführt wird, jeweils ein Zeichen gelesen und geprüft, ob das gelesene Zeichen ein Leerzeichen oder ein Buchstabe ist. Falls dies der Fall ist, wird nochmals abgefragt, ob das gelesene Zeichen ein Leerzeichen ist. Falls dies nicht der Fall ist, wird das gelesene Zeichen gespeichert. Dabei kann gleichzeitig ein Zählwert für die Anzahl H der Buchstaben im Text um 1 erhöht werden (Schritt S12). Die Zählung der Buchstaben im Text, also Schritt S12 kann jedoch auch in einem gesonderten Zähler 27 durchgeführt werden.

Ist das gelesene Zeichen bei der zweiten Abfrage ein Leerzeichen, so wird geprüft, ob das zuletzt gespeicherte Zeichen auch bereits ein Leerzeichen war. Falls das zuletzt gespeicherte Zeichen ein Buchstabe war, wird das Leerzeichen gespeichert und, falls noch weitere Zeichen vorhanden sind, das nächste Zeichen gelesen. Wird jedoch festgestellt, daß das letzte gespeicherte Zeichen ebenfalls ein Leerzeichen war, so wird direkt das nächste Zeichen gelesen.

Auch wenn das jeweils gelesene Zeichen kein Buchstabe oder Leerzeichen ist, wird direkt zum Lesen des nächsten Zeichens weitergegangen.

Nachdem auf diese Weise der zu analysierende Text vorbereitet wurde, und die Anzahl H der Buchstaben im Text gezählt wurde, wird im Schritt S13 überprüft, ob die Anzahl H der Buchstaben im Text größer als das Quadrat $N^2$ der Anzahl N der Buchstaben im verwendeten Gesamtalphabet ist. Ist dies der Fall, so wird im Schritt S14 eine Häufigkeitsverteilung von 3-Buchstaben-Gruppen ermittelt. Ist jedoch die Anzahl H nicht größer als das Quadrat $N^2$ der Anzahl N so wird im Schritt S15 überprüft, ob die Anzahl N der Buchstaben im Alphabet kleiner oder gleich der Anzahl H der Buchstaben im Text ist. Ist dies der Fall, so wird im Schritt S16 die Häufigkeitsverteilung von 2-Buchstaben-Gruppen ermittelt. Andernfalls geht das Verfahren weiter zu Schritt S17, wo die Häufigkeitsverteilung von Einzelbuchstaben festgestellt wird.

Nach der Ermittlung einer Häufigkeitsverteilung in Schritt S14 oder S16 für 3-Buchstaben-Gruppen bzw. 2-Buchstaben-Gruppen wird mit der Ermittlung von Häufigkeitsverteilungen in Schritt S16 bzw. S17 fortgefahren, so daß für jeden Text je nach Anzahl H der darin vorhandenen Buchstaben eine, zwei oder drei verschiedene Häufigkeitsverteilungen $h_1$, $h_2$, $h_3$ ermittelt werden.

Zur Ermittlung der Einzelbuchstabenstatistik in Schritt S17, also zur Ermittlung der Häufigkeitsverteilung von $h_1(x)$ der Einzelbuchstaben im Text wird für jeden Buchstaben x (x = a, b, c...) die Anzahl n (x) jedes Buchstabens im Text ermittelt. Nachdem für jeden Buchstaben im Alphabet festgestellt wurde, wie häufig er im Text auftritt, werden die entsprechenden Werte durch die Gesamtzahl H der Buchstaben im Text dividiert, um so die Häufigkeitsverteilung $h_1(x)$ = n(x)/H zu erhalten.

Für die 2-Buchstabenstatistik, also für die Ermittlung der Häufigkeitsverteilung von 2-Buchstaben-Gruppen im Schritt S16 wird der gesamte Text in 2-Buchstaben-Gruppen unterteilt. Das Wort "DIES" wird dabei beispielsweise unter Brücksichtigung der Leerzeichen in folgende 2-Buchstaben-Gruppen zerlegt:

".D", "DI", "IE", "ES", "S."

Für jede mögliche Kombination von zwei Buchstaben des verwendeten Alphabets, also vorzugsweise des Gesamtalphabets mit sämtlichen in westlichen Sprachen verwendeten Sonderbuchstaben, die aus den üblichen lateinischen Buchstaben abgeleitet wurden, wird dann die Anzahl n(x, y) ermittelt, mit der jede 2-Buchstabenkombination im Text vorliegt. Um die Häufigkeitsverteilung $h_2(x, y)$ zu erhalten, wird dann die Anzahl jeder einzelnen 2-Buchstaben-Gruppe durch die Gesamtanzahl der 2-Buchstaben-Gruppen im Text dividiert.

In entsprechender Weise wird bei der 3-Buchstabenstatistik, also bei der Ermittlung der Häufigkeitsverteilung von 3-Buchstaben-Gruppen, der Text in 3-Buchstaben-Gruppen zerlegt. Dabei ist zu berücksichtigen, daß in der Mitte einer 3-Buchstaben-Gruppe kein Leerzeichen auftreten darf. Beispielsweise ergeben sich also aus einem Text "DIES IST EIN" die folgenden 3-Buchstaben-Gruppen:

".DI", "DIE", "IES", "ES.", ".IS", "IST", "ST.", ".EI", "EIN", "IN."

Auch hier wird dann in entsprechender Weise für jede mögliche 3-Buchstaben-Gruppe x, y, z festgestellt, wie häufig sie im Text auftritt. Die einzelnen Anzahlen n(x, y, z) der einzelnen 3-Buchstaben-Gruppen werden dann durch die Gesamtanzahl von 3-Buchstaben-Gruppen im Text dividiert, um die Häufigkeitsverteilung $h_3(x, y, z)$ für 3-Buchstaben-Gruppen zu erhalten.

Entsprechende Häufigkeitsverteilungen $1_1(x)$, $1_2(x, y)$ und $1_3(x, y, z)$ von Einzelbuchstaben, 2-Buchstaben-Gruppen und 3-Buchstaben-Gruppen sind für jede verfügbare Sprache im Statistikspeicher 35 gespeichert. Zur Ermittlung der Sprache im Schritt S 18 werden die ermittelten Häufigkeitsverteilungen $h_1$, $h_2$, $h_3$ mit den entsprechenden gespeicherten Häufigkeitsverteilungen $1_1$, $1_2$, $1_3$ für die verfügbaren Sprachen verglichen, um daraus Ähnlichkeitswerte $s_1$ $s_2$, $s_3$ zu bestimmen.

Hierzu wird für jeden Buchstaben, jede 2-Buchstaben-Gruppe bzw. jede 3-Buchstaben-Gruppe die Differenz zwischen der Häufigkeit im Text und der Häufigkeit in einer bestimmten Sprache berechnet und durch die Summe der entsprechenden Häufigkeiten dividiert. Die so ermittelten Werte werden summiert, durch Division mit der Anzahl N der möglichen Buchstaben bzw. der Anzahl $N^2$ der möglichen 2-Buchstaben-Gruppen bzw. der Anzahl $N^3$ der möglichen 3-Buchstaben-Gruppen normiert und jeweils von 1 subtrahiert. Die einzelnen Ähnlichkeitenfaktoren $s_1$, $s_2$, $s_3$ ergeben sich also durch folgende Gleichungen:

$$s_1 = 1 - \frac{1}{N} \sum_x \frac{|h_1(x) - 1_1(x)|}{h_1(x) + 1_1(x)}$$

$$s_2 = 2 - \frac{1}{N} \sum_x \frac{|h_1(x) - 1_1(x)|}{h_1(x) + 1_1(x)} - \frac{1}{N^2} \sum_{x,y} \frac{|h_2(x, y) - 1_2(x, y)|}{h_2(x, y) + 1_2(x, y)}$$

$$s_3 = 3 - \frac{1}{N} \sum_x \frac{|h_1(x) - 1_1(x)|}{h_1(x) + 1_1(x)} - \frac{1}{N^2} \sum_{x,y} \frac{|h_2(x, y) - 1_2(x, y)|}{h_2(x, y) + 1_2(x, y)} - \frac{1}{N^3} \sum_{x,y,z} \frac{|h_3(x, y, z) - 1_3(x, y, z)|}{h_3(x, y, z) + 1_3(x, y, z)}$$

Für sehr kurze Mitteilungen, deren Buchstabenanzahl H kleiner als die Anzahl N der Buchstaben im verwendeten Alphabet ist, wird nur die Einzelbuchstabenstatistik durchgeführt und ein Ähnlichkeitsfaktor $s_1$ berechnet, der zwischen 0 und 1 liegt. 0 bedeutet dabei keine Übereinstimmung zwischen den verglichenen Häufigkeitsverteilungen h 1 und $I_1$ während 1 die vollständige Übereinstimmung anzeigt. Üblicherweise liegt der Wert jedoch zwischen diesen Extremen.

Für mittellange Texte, also für Texte deren Buchstabenanzahl H zwischen N und $N^2$ liegt, wird zusätzlich noch die Häufigkeitsverteilung von 2-Buchstaben-Gruppen bestimmt und mit den entsprechenden Häufigkeitsverteilungen der einzelnen Sprachen verglichen. Für sehr lange Texte kommt dann noch als 3-Buchstabenstatistik der Vergleich der Häufigkeitsverteilungen von 3-Buchstaben-Gruppen hinzu.

Nachdem also beispielsweise für einen kurzen Text mit weniger als N Buchstaben die Ähnlichkeitswerte $s_1(Li)$ für verschiedene verfügbare Sprachen Li ermittelt wurden, wird der größte Wert der Ähnlichkeitsfaktoren $s_1(Li)$ bestimmt. Ist dieser größte Wert von $s_1(Li)$, also $\max(s_1(Li)) \geq s_1$, Schwelle so wird die Sprache Li als Sprache des Textes festgestellt und im Schritt S 19 an das Sprachsynthesemodul 15 weitergeleitet.

Im Sprachsynthesemodul 15 werden dann die zur Sprache Li gehörigen Ausspracheregeln ausgewählt, so daß die Sprachsyntheseeinheit 17 diese bei der Spracherzeugung verwenden kann.

Werden je nach Länge des wiederzugebenden Textes auch noch die Ähnlichkeitsfaktoren $s_2$ und gegebenenfalls $s_3$ ermittelt, so werden hierfür entsprechende Schwellwerte verwendet, um eine zuverlässige Spracherkennung sicher zu stellen.

Konnte die Sprache des Textes nicht mit nötiger Zuverlässigkeit festgestellt werden, weil beispielsweise der Text in einer Sprache abgefaßt war, für die keine Häufigkeitsverteilungen in der erfindungsgemäßen Kommunikationsvorrichtung gespeichert sind oder weil der Text zu wenig Zeichen umfaßt, so wird der Benutzer zunächst informiert, daß keine Sprache des Textes festgestellt werden konnte und daß daher auf eine gesprochene Textausgabe zunächst verzichtet wird.

Der Benutzer hat nun die Möglichkeit, selbst eine Sprache einzugeben um eine Sprachausgabe zu starten. Darüber hinaus besteht die Möglichkeit, die berechnete bzw. berechneten Häufigkeitsverteilungen unter dem Namen der vom Benutzer eingegebenen Sprache als Häufigkeitsverteilung $1_1$, $1_2$, $1_3$ im Statistikspeicher 35 des Spracherkennungsmoduls 23 zu speichern.

Empfängt das Mobiltelefon häufiger Nachrichten in dieser neuen Sprache so können die jeweils ermittelten Häufigkeitsverteilungen zu den bereits gespeicherten Häufigkeitsverteilungen hinzugefügt werden, so daß die gespeicherten Häufigkeitsverteilungen $1_1$, $1_2$, $1_3$ der neuen Sprache Ln eine immer höhere statistische Zuverlässigkeit bekommen.

Zweckmäßigerweise kann auch vorgesehen sein, daß auch bereits gespeicherte Häufigkeitsverteilungen $1_1$, $1_2$, $1_3$ weiter ergänzt werden, um die statistische Zuverlässigkeit der gespeicherten Häufigkeitsverteilugnen weiter zu verbessern.

Um das Ergebnis der Spracherkennung zusätzlich zu überprüfen, ist es auch möglich, nach dem Feststellen einer Sprache Li als Sprache des analysierten Textes, Sonderbuchstaben der festgestellten Sprache mit Sonderbuchstaben im Text zu vergleichen, um festzustellen, ob die ermittelte Sprache plausibel ist. Wird beispielsweise als Sprache des Textes Deutsch ermittelt, und treten in dem Text Umlaute wie ä, ö, ü auf, so kann diese Feststellung der Sprache als gesichert gelten. Das gleiche würde gelten, wenn im Falle von Umlauten die türkische Sprache als Sprache des Textes festgestellt würde.

Ein derartiger Vergleich von Sonderbuchstaben kann jedoch auch vor dem Vergleich der ermittelten Häufigkeitsverteilungen mit den gespeicherten Häufigkeitsverteilungen der verfügbaren Sprachen durchgeführt werden, um solche Sprachen auszuschließen, bei denen entsprechende Sonderbuchstaben nicht auftreten.

Das erfindungsgemäße Verfahren zum Erkennen einer Sprache, in der ein Text verfaßt ist, läßt sich überall dort einsetzen, wo für die weitere Verarbeitung des Textes die Kenntnis seiner Sprache erforderlich ist. Ein bevorzugtes Anwendungsbeispiel ist die Sprachsynthese bei der Sprachwiedergabe von e-mails, Kurznachrichten, von als Text vorliegenden Verkehrsinformationen und dergleichen. Darüber hinaus kann das erfindungsgemä-ße Verfahren auch dort eingesetzt werden, wo ein Text, dessen Sprache unbekannt ist, in einem Übersetzungsprogramm in eine Zielsprache übersetzt werden soll.

Obwohl die Erfindung nur im Hinblick auf mit Telekommunikationsnetzen benutzten Mobiltelefonen erläutert wurde, kann als Kommunikationsvorrichtung auch ein mit dem Internet verbundener Personal Computer oder ein nur über eine Telefonleitung mit einer anderen Datenverarbeitungsanlage verbundener Computer verwendet werden.

**Patentansprüche**

1. Computergestütztes Verfahren zum Erkennen einer Sprache, in der ein als Zeichenfolge vorliegender Text verfasst ist, um diesen sprachspezifisch automatisch, weiter zu verarbeiten, bei dem

- eine oder mehrere Häufigkeitsverteilungen ($h_1(x)$, $h_2(x,y)$, $h_3(x,y,z)$) von Buchstaben im Text ermittelt (S14, S16, S17) wird,
- die ermittelten Häufigkeitsverteilungen ($h_1(x)$, $h_2(x,y)$, $h_3(x,y,z)$) mit entsprechenden Häufigkeitsverteilungen ($1_1(x)$, $1_2(x,y)$, $1_3(x,y,z)$) von verfügbaren Sprachen verglichen wird, um Ähnlichkeitsfaktoren ($s_1$, $s_2$, $s_3$) zu ermitteln, die die Ähnlichkeit der Sprache des Textes mit den verfügbaren Sprachen anzeigen, und
- die Sprache, für die die ermittelten Ähnlichkeitsfaktoren ($s_1$, $s_2$, $s_3$) am größten ist, als Sprache des Textes festgestellt (S18) wird.

**dadurch gekennzeichnet, dass**

- die Länge des Textes festgestellt (S12) wird und in Abhängigkeit von der Länge des Textes (S13, S15) bestimmt wird, ob eine, zwei oder mehrere Häufigkeitsverteilungen ($h_1(x)$, $h_2(x,y)$, $h_3(x,y,z)$) von Buchstaben und Buchstabengruppen im Text ermittelt werden müssen und diese entsprechend zu ermitteln.

2. Verfahren nach Anspruch 1, **dadurch gekennzeichnet, dass** die Feststellung der Sprache nur dann erfolgt, wenn der ermittelte größte Ähnlichkeitsfaktor ($s_1$, $s_2$, $s_3$) größer als ein Schwellenwert ist.

3. Verfahren nach Anspruch 1 oder 2, **dadurch gekennzeichnet, dass** die ermittelte Häufigkeitsverteilung ($h_1(x)$, $h_2(x,y)$, $h_3(x,y,z)$) als Häufigkeitsverteilung ($l_1(x)$, $l_2(x,y)$, $l_3(x,y,z)$) einer neuen Sprache gespeichert oder einer entsprechenden Häufigkeitsverteilung ($l_1(x)$, $l_2(x,y)$, $l_3(x,y,z)$) einer Sprache hinzugefügt wird, wenn auf Anfrage eine Sprache angegeben wird, der die ermittelte Häufigkeitsverteilung ($h_1(x)$, $h_2(x,y)$, $h_3(x,y,z)$) zuzuordnen ist.

4. Verfahren nach Anspruch 1, 2 oder 3, **dadurch gekennzeichnet, dass** die ermittelte Häufigkeitsverteilung ($h_1(x)$, $h_2(x,y)$, $h_3(x,y,z)$) zu der entsprechenden Häufigkeitsverteilung ($l_1(x)$, $l_2(x,y)$, $l_3(x,y,z)$) der festgestellten Sprache hinzugefügt wird.

5. Verfahren nach einem der vorstehenden Ansprüche, **dadurch gekennzeichnet, dass** aus der Zeichenfolge des Textes bis auf Leerzeichen alle Nicht-Buchstabenzeichen entfernt (S11) werden, um aus der so erhaltenen Zeichenfolge Häufigkeitsverteilungen ($h_1(x)$, $h_2(x,y)$, $h_3(x,y,z)$) von Buchstaben und Buchstabengruppen im Text zu ermitteln.

6. Verfahren nach einem der vorstehenden Ansprüche, **dadurch gekennzeichnet, dass** die Länge des Textes als Anzahl (H) der Buchstaben im Text festgestellt (S 12) wird und dass die Anzahl (H) der Buchstaben im Text mit der Anzahl (N) der Buchstaben in einem Alphabet verglichen (S 13, S 14) wird, um zu bestimmen, welche Häufigkeitsverteilungen ($h_1(x)$, $h_2(x,y)$, $h_3(x,y,z)$) ermittelt werden.

7. Verfahren nach Anspruch 6, **dadurch gekennzeichnet, dass** die Häufigkeitsverteilungen ($h_3(x,y,z)$, $h_2(x,y)$ bzw. $h_1(x)$) von Buchstabengruppen mit drei Buchstaben (S 14), von Buchstabengruppen mit zwei Buchstaben (S 16) und von Einzelbuchstaben (S 17) ermittelt werden, wenn die Anzahl (H) der Buchstaben im Text größer als das Quadrat ($N^2$) der Anzahl (N) der Buchstaben im Alphabet (S 13) ist.

8. Verfahren nach Anspruch 6 oder 7, **dadurch gekennzeichnet, dass** die Häufigkeitsverteilungen ($h_2(x,y)$ bzw. $h_1(x)$) von Buchstabengruppen mit zwei Buchstaben (S 16) und von Einzelbuchstaben (S 17) ermittelt werden, wenn die Anzahl (H) der Buchstaben im Text größer als die Anzahl (N) der Buchstaben im Alphabet (S 15) ist.

9. Verfahren nach Anspruch 6, 7 oder 8, **dadurch gekennzeichnet, dass** die Häufigkeitsverteilung ($h_1(x)$) von Einzelbuchstaben (S17) ermittelt wird, wenn die Anzahl (H) der Buchstaben im Text kleiner als die Anzahl (N) der Buchstaben im Alphabet (S 15) ist.

10. Verfahren nach einem der vorstehenden Ansprüche, **dadurch gekennzeichnet, dass** ein Gesamtalphabet verwendet wird, das auch auf lateinischen Buchstaben basierende Sonderbuchstaben verschiedener Sprachen enthält.

11. Verfahren nach einem der vorstehenden Ansprüche, **dadurch gekennzeichnet, dass** die im Text vorhandenen Buchstaben auf Sonderbuchstaben untersucht werden, um je nach dem Vorhandensein oder dem Nichtvorhandensein von für bestimmte Sprachen charakteristischen Sonderbuchstaben die Sprachen auszuwählen, die beim Vergleich der ermittelten Häufigkeitsverteilung ($h_1(x)$, $h_2(x,y)$, $h_3(x,y,z)$) mit entsprechenden Häufigkeitsverteilungen ($1_1(x)$, $1_2(x,y)$, $1_3(x,y,z)$) von verfügbaren Sprachen zu berücksichtigen sind.

12. Verfahren nach einem der vorstehenden Ansprüche, **dadurch gekennzeichnet, dass** nach dem Feststellen der Sprache, die im Text vorhandenen Buchstaben auf Sonderbuchstaben untersucht werden, die für die festgestellte Sprache und für nicht festgestellte Sprachen charakteristisch sind, um die festgestellte Sprache zu bestätigen.

13. Verfahren zum Steuern einer Sprachwiedergabeeinheit (14), bei dem

- für einen mittels eines Sprachsynthesemoduls (15) der Sprachwiedergabeeinheit (14) gesprochen auszugebenden Text eine Spracherkennung nach einem der vorstehenden Ansprüche 1 bis 12 durchgeführt wird,
- die dabei festgestellte Sprache an die Sprachwiedergabeeinheit (14) übertragen wird, und
- in der Sprachwiedergabeeinheit (14) die Ausspracheregeln der festgestellten Sprache ausgewählt und für die synthetische Sprachwiedergabe des Textes vom Sprachsynthesemodul (15) verwendet werden.

**14.** Kommunikationsvorrichtung mit

- einem Empfangsmodul (10) zum Empfangen, Bearbeiten und Verwalten von Informationen,
- einem Sprachsynthesemodul (15), das zur gesprochenen Ausgabe von Texten mit dem Empfangsmodul (10) in Verbindung steht, und
- einem Spracherkennungsmodul (23), dem ein vom Sprachsynthesemodul (15) auszugebender Text zum Erkennen der Sprache, in der der auszugebende Text verfasst ist, zuführbar ist und das zum Übertragen einer für diesen Text festgestellten Sprache mit dem Sprachsynthesemodul (15) verbunden ist,

**dadurch gekennzeichnet, dass**

- ein Statistikkreis (28) erste, zweite und dritte Rechenkreise (31, 32, 33) aufweist, um Häufigkeitsverteilungen (h1(x), h2(x,y), h3(x,y,z)) von Einzelbuchstaben, von Buchstabengruppen mit zwei Buchstaben bzw. von Buchstabengruppen mit drei Buchstaben zu ermitteln,

wobei der Statistikkreis (28) eingerichtet ist, in Abhängigkeit von einer Länge des Textes zu bestimmen, ob eine, zwei oder mehrere Häufigkeitsverteilungen ($h_1(x)$, $h_2(x,y)$, $h_3(x,y,z)$) von Buchstaben und Buchstabengruppen im Text zu ermitteln sind und diese entsprechend zu ermitteln.

**15.** Kommunikationsvorrichtung nach Anspruch 14, **dadurch gekennzeichnet, dass** in dem Sprachsynthesemodul (15) Ausspracheregeln für verschiedene Sprachen gespeichert sind.

**16.** Kommunikationsvorrichtung nach Anspruch 15, **dadurch gekennzeichnet, dass** im Sprachsynthesemodul (15) ein Ausspracheregel-Auswahlkreis (21) vorgesehen ist, der mit dem Spracherkennungsmodul (23) verbunden ist und die in Abhängigkeit von der vom Spracherkennungsmodul (23) übertragenen Sprache die entsprechende Ausspracheregel auswählt, so dass diese von einer Sprachsyntheseeinheit (17) des Sprachsynthesemoduls (15) verwendet werden kann.

**17.** Kommunikationsvorrichtung nach Anspruch 14, 15 oder 16, **dadurch gekennzeichnet, dass** das Spracherkennungsmodul (23) einen Filterkreis (26) umfasst, um aus einer Zeichenfolge eines Textes bis auf Leerzeichen alle Nicht-Buchstabenzeichen zu entfernen.

**18.** Kommunikationsvorrichtung nach einem der Ansprüche 14 bis 17, **dadurch gekennzeichnet, dass** das Spracherkennungsmodul (23) einen Statistikkreis (28) umfasst, um eine Häufigkeitsverteilung ($h_1(x)$, $h_2(x,y)$, $h_3(x,y,z)$) von Buchstaben im Text zu ermitteln.

**19.** Kommunikationsvorrichtung nach einem der Ansprüche 14 bis 18, **dadurch gekennzeichnet, dass** das Spracherkennungsmodul (23) einen Vergleicherkreis (34) aufweist, um zur Ermittelung von Ähnlichkeitsfaktoren ($s_1$, $s_2$, $s_3$) für einen Text ermittelte Häufigkeitsverteilungen ($h_1(x)$, $h_2(x,y)$, $h_3(x,y,z)$) von Buchstaben mit entsprechenden gespeicherten Häufigkeitsverteilungen ($1_1(x)$, $1_2(x,y)$, $1_3(x,y,z)$) verfügbarer Sprachen zu vergleichen.

**20.** Kommunikationsvorrichtung nach Anspruch 19, **dadurch gekennzeichnet, dass** das Spracherkennungsmodul (23) einen Auswertekreis (36) umfasst, dem die Ähnlichkeitsfaktoren ($s_1$, $s_2$, $s_3$) vom Vergleicherkreis (34) zuführbar sind, um die Sprache als Sprache des Textes festzustellen, für die der ermittelte Ähnlichkeitsfaktor ($s_1$, $s_2$, $s_3$) am größten ist.

**Claims**

**1.** A computer-assisted method for identifying a language in which a text existing as a string of characters is composed in order to automatically further process said text in a language-specific manner, in which

- one more frequency distributions ($h_1(x)$, $h_2(x,y)$, $h_3(x,y,z)$) of letters in the text is determined (S14, S16, S17),
- the determined frequency distributions ($h_1(x)$, $h_2(x,y)$, $h_3(x,y,z)$) are compared with corresponding frequency distributions ($l_1(x)$, $l_2(x,y)$, $l_3(x, y, z)$) of available languages in order to determine similarity factors ($s_1$, $s_2$, $s_3$) which indicate the similarity of the language of the text with available languages, and
- the language for which the determined similarity factors ($s_1$, $s_2$, $s_3$) is the greatest is established as the language of the text (S18),

**characterised in that**

- the length of the text is established (S12) and in dependence on the length of the text (S13, S15) it is determined whether one, two or more frequency distributions ($h_1(x)$, $h_2(x,y)$, $h_3(x,y,z)$) of letters and groups of letters in the text have to be determined and to determine them accordingly.

2. A method according to Claim 1,
**characterised in that** the language is only established if the greatest similarity factor ($s_1$, $s_2$, $s_3$) determined is greater than a threshold value.

3. A method according to Claim 1 or 2,
**characterised in that** the determined frequency distribution ($h_1(x)$, $h_2(x,y)$, $h_3(x,y,z)$) is stored as the frequency distribution ($I_1(x)$, $I_2(x,y)$, $I_3(x,y,z)$) of a new language or is added to a corresponding frequency distribution ($I_1(x)$, $I_2(x,y)$, $I_3(x,y,z)$) of a language if, in response to an enquiry, a language to which the determined frequency distribution ($h_1(x)$, $h_2(x,y)$, $h_3(x,y,z)$) is to be assigned is indicated.

4. A method according to Claim 1, 2 or 3,
**characterised in that** the determined frequency distribution ($h_1(x)$, $h_2(x, y)$, $h_3(x,y,z)$) is added to the corresponding frequency distribution $I_1(x)$, $I_2(x,y)$, $I_3(x,y,z)$) of the determined language.

5. A method according to one of the preceding Claims,
**characterised in that** all non-letter characters are removed (S11) from the character string of the text except for space characters in order to determine from the thus obtained character string frequency distributions ($h_1(x)$, $h_2(x, y)$, $h_3(x,y,z)$) of letters and groups of letters in the text.

6. A method according to one of the preceding Claims,
**characterised in that** the length of the text is established (S12) as the number (H) of the letters in the text and **in that** the number (H) of the letters in the text is compared with the number (N) of the letters in an alphabet (S13, S14) in order to determine which frequency distributions ($h_1(x)$, $h_2(x,y)$, $h_3(x,y,z)$) are determined.

7. A method according to Claim 6,
**characterised in that** the frequency distributions ($h_3(x,y,z)$, $h_2(x,y)$) and $h_1(x)$) of groups of letters with three letters (S14), of groups of letters with two letters (S16) and of individual letters (S17) are determined if the number (H) of letters in the text is greater than the square ($N^2$) of the number (N) of the letters in the alphabet (S13).

8. A method according to Claim 6 or 7,
**characterised in that** the frequency distributions ($h_2(x,y)$) and ($h_1(x)$) of groups of letters with two letters (S16) and of individual letters (S17) are determined if the number (H) of the letters in the text is greater than the number (N) of the letters in the alphabet (S15).

9. A method according to Claim 6, 7 or 8,
**characterised in that** the frequency distribution ($h_1(x)$) of individual letters (S17) is determined if the number (H) of the letters in the text is less than the number (N) of letters in the alphabet (S15).

10. A method according to one of the preceding Claims,
**characterised in that** a complete alphabet is used, which also contains special letters of various languages based on Latin letters.

11. A method according to one of the preceding Claims,
**characterised in that** the letters present in the text are investigated for special letters, in order to select, depending on the presence or absence of special letters characteristic for certain languages, the languages which are to be taken into consideration during the comparison of the determined frequency distribution ($h_1(x)$, $h_2(x,y)$, $h_3(x,y,z)$) with corresponding frequency distributions ($I_1(x)$, $I_2(x,y)$, $I_3(x,y,z$) of available languages.

12. A method according to one of the preceding Claims,
**characterised in that** after the language has been established, the letters present in the text are investigated for special letters which are characteristic of the language established and of languages not established in order to confirm the language established.

**13.** A method for controlling speech reproduction unit (14), in which

- a language recognition operation according to one of the preceding Claims 1 to 12 is carried out for a text to be outputted that is spoken by means of a speech synthesis module (15) of the speech reproduction unit (14),
- the language thereby established is transmitted to the speech reproduction unit (14), and
- in the speech reproduction unit (14), the pronunciation rules of the language established are selected and are used for the synthetic speech reproduction of the text by the speech synthesis module (15).

**14.** A communication device with

- a receiving module (10) for receiving, processing and managing information,
- a speech synthesis module (15), which communicates with the receiving module (10) for the spoken output of texts, and
- a language recognition module (23), to which a text to by outputted by the speech synthesis module (15) can be supplied for recognising the language in which the text to be outputted is composed, and which is connected to the speech synthesis module (15) for transmitting a language established for this text,

**characterised in that**

- a statistics circuit (28) comprises first, second and third computing circuits (31, 32, 33) in order to determine frequency distributions ($h_1(x)$, $h_2(x,y)$, $h_3(x,y,z)$) of individual letters, of groups of letters with two letters and of groups of letters with three letters,
- wherein the statistics circuit (28) is set up in order to determine, in dependence on a length of the text, whether one, two or more frequency distributions ($h_1(x)$, $h_2(x, y)$, $h_3(x,y,z)$) of letters and groups of letters in the text are to be determined and to determine them accordingly.

**15.** A communication device according to Claim 14,
**characterised in that** pronunciation rules for different languages are stored in the speech synthesis module (15).

**16.** A communication device according to Claim 15,
**characterised in that** in the speech synthesis module (15) is provided a pronunciation rule selection circuit (21), which is connected to the language recognition module (23) and which selects the appropriate pronunciation rule in dependence on the language transmitted by the language recognition module (23) so that said rule can be used by a speech synthesis unit (17) of the speech synthesis module (15).

**17.** A communication device according to Claim 14, 15 or 16,
**characterised in that** the language recognition module (23) comprises a filter circuit (26) in order to remove all non-letter characters except for space characters from a character string of a text.

**18.** A communication device according to one of Claims 14 to 17,
**characterised in that** the language recognition module (23) comprises a statistics circuit (28) in order to determine a frequency distribution ($h_1, (x)$, $h_2(x,y)$, $h_3(x,y,z)$) of letters in the text.

**19.** A communication device according to one of Claims 14 to 18,
**characterised in that** the language recognition module (23) comprises a comparator circuit (34) in order to compare determined frequency distributions ($h_1(x)$, $h_2(x,y)$, $h_3(x,y,z)$) of letters with corresponding stored frequency distributions ($l_1(x)$, $l_2(x, y)$, $l_3(x,y,z)$) of available languages, for the determination of similarity factors ($s_1$, $S_2$, $S_3$) for a text.

**20.** A communication device according to Claim 19,
**characterised in that** the language recognition module (23) comprises an evaluation circuit (36) to which the similarity factors ($s_1$, $s_2$, $s_3$) can be supplied by the comparator circuit (34) in order to establish the language for which the determined similarity factor ($s_1$, $s_2$, $s_3$) is greatest as the language of the text.

**Revendications**

**1.** Procédé de reconnaissance vocale assisté par ordinateur, dans lequel un texte, se présentant sous forme de succession de caractères, est rédigé, pour retraitement automatique de celui-ci, spécifiquement par rapport à la langue, dans lequel

- une ou plusieurs distributions de fréquence ($h_1(x)$, $h_2(x,y)$, $h_3(x,y,z)$) de lettres dans le texte sont déterminées (S14, S16, S17),
- les distributions de fréquence ($h_1(x)$, $h_2(x,y)$, $h_3(x,y,z)$ déterminées sont comparées à des distributions de fréquence ($I_1(x)$, $I_2(x,y)$, $I_3(x,y,z)$) correspondantes, de langues disponibles, afin de déterminer des facteurs de similitude ($s_1$, $s_2$, $s_3$) affichant la similitude de la langue du texte avec les langues disponibles et
- la langue, pour laquelle les facteurs de similitude ($s_1$, $s_2$, $s_3$) déterminés sont maximaux, est considérée comme langue du texte (S18),

**caractérisé en ce que**

- la longueur du texte est fixée (S12) et, en fonction de la longueur du texte (S13, S15), il est déterminé si une, deux ou plusieurs distributions de fréquence ($h_1(x)$, $h_2(x,y)$, $h_3(x,y,z)$) de lettres et de groupes de lettres dans le texte doivent être déterminés et celle-ci sont déterminées de façon correspondante.

2. Procédé selon la revendication 1, **caractérisé en ce que** la fixation de la langue ne s'effectue que si le facteur de similitude maximal ($s_1$, $s_2$, $s_3$) déterminé est supérieur à une valeur seuil.

3. Procédé selon la revendication 1 ou 2, **caractérisé en ce que** la distribution de fréquence ($h_1(x)$, $h_2(x, y)$, $h_3(x,y,z)$) déterminée est mémorisée, en tant que distribution de fréquence ($I_1(x)$, $I_2(x, y)$, $I_3(x,y,z)$) d'une nouvelle langue ou d'une distribution de fréquence ($I_1(x)$, $I_2(x,y)$, $I_3(x,y,z)$) correspondante d'une langue ajoutée, lorsque, sur demande, est indiquée une langue à laquelle doit être associée la distribution de fréquence ($h_1(x)$, $h_2(x,y)$, $h_3(x, y, z)$) déterminée.

4. Procédé selon la revendication 1, 2 ou 3, **caractérisé en ce que** la distribution de fréquence ($h_1(x)$, $h_2(x,y)$, $h_3(x, y,z)$) déterminée est ajoutée à la distribution de fréquence ($I_1(x)$, $I_2(x, y)$, $I_3(x, y, z)$) correspondante de la langue constatée.

5. Procédé selon l'une des revendications précédentes, **caractérisé en ce que**, à partir de la succession de caractères du texte jusqu' au caractère vide, tous les caractères qui ne sont pas des lettres sont éliminés (S11), pour déterminer, à partir de la succession de caractères ainsi obtenue, des distribution de fréquence ($h_1(x)$, $h_2(x,y)$, $h_3(x,y,z)$) de lettres et de groupes de lettres dans le texte.

6. Procédé selon l'une des revendications précédentes, **caractérisé en ce que** la longueur du texte est fixée en tant que nombre (H) de lettres dans le texte (S12), et **en ce que** le nombre (H) des lettres dans le texte est comparé au nombre (N) des lettres dans un alphabet (S13, S14), pour déterminer quelles distributions de fréquence ($h_1(x)$, $h_2(x, y)$, $h_3(x, y, z)$) sont déterminées.

7. Procédé selon la revendication 6, **caractérisé en ce que** les distributions de fréquence ($h_3(x, y, z)$, $I_2(x, y)$, $h_1(x)$), de groupes de lettres avec trois lettres (S14), de groupes de lettres avec deux lettres (S16) et de lettres individuelles (S17), sont déterminées, si le nombre (H) des lettres dans le texte est supérieur au carré ($N^2$ du nombre (N) des lettres dans l'alphabet (S13).

8. Procédé selon la revendication 6 ou 7, **caractérisé en ce que** les distributions de fréquence ($I_2(x,y)$, $h_1(x)$), des groupes de lettres ayant deux lettres (S16) et de lettres individuelles (S17), sont déterminées si le nombre (H) des lettres dans le texte est supérieur au nombre (N) des lettres dans l'alphabet (S15).

9. Procédé selon la revendication 6, 7 ou 8, **caractérisé en ce que** la distribution de fréquence ($h_1(x)$) de lettres individuelles (S17) est déterminée, si le nombre (H) des lettres dans le texte est inférieur au nombre (N) des lettres dans l'alphabet (S15).

10. Procédé selon l'une des revendications précédentes, **caractérisé en ce qu'**est utilisé un alphabet global, qui contient des lettres spéciales de différentes langues, se basant sur des lettres latines.

11. Procédé selon l'une des revendications précédentes, **caractérisé en ce que** les lettres existant dans le texte sont examinées pour trouver des lettres spéciales, pour, selon la présence ou la non présence de lettres spéciales caractéristiques de lettres déterminées, sélectionner les langues qui, lors d'une comparaison de la distribution de

fréquence ($h_1(x)$, $h_2(x,y)$, $h_3(x,y,z)$) déterminée avec des distributions de fréquence ($l_1(x)$, $l_2(x,y)$, $l_3(x,y, z)$) correspondantes de langues disponibles, sont à prendre en considération.

**12.** Procédé selon l'une des revendications précédentes, **caractérisé en ce que**, après avoir fixée la langue, les lettres existant dans le texte sont examinées pour trouver des lettres spéciales, caractéristiques de la langue fixée et de langues non fixées, afin de confirmer la langue fixée.

**13.** Procédé de commande d'une unité de restitution vocale (14), pour lequel :

- pour un texte à éditer en étant énoncé au moyen d'un module de synthèse vocale (15) de l'unité de restitution vocale (14), une identification de langue est effectuée selon l'une des revendications 1 à 12 ci-dessus,
- la langue alors fixée est transmise à l'unité de restitution vocale (14), et
- dans l'unité de restitution vocale (14), les règles d'énonciation de la langue fixée sont sélectionnées et utilisées pour la restitution vocale synthétique du texte par le module de synthèse vocale (15).

**14.** Dispositif de communication, comprenant :

- un module de réception (10), pour recevoir, traiter et administrer des informations,
- un module de synthèse vocale (15), qui est en liaison avec le module de réception (10) pour l'édition parlée de textes, et
- un module d'identification de langue (23), auquel peut être amené un texte à éditer par le module de synthèse vocale (15), pour identifier la langue dans laquelle le texte à éditer est rédigé et qui est relié au module de synthèse vocale (15), pour transmettre une langue fixée pour ce texte,

**caractérisé en ce que**

- un cercle statistique (28) présente des premiers, deuxièmes et troisièmes cercles de calcul (31, 32, 33), pour déterminer des distributions de fréquence ($h_1(x)$, $h_2(x, y)$, $h_3(x,y,z)$, de lettres individuelles, de groupes de lettres ayant deux lettres, ou de groupes de lettres ayant trois lettres,

le cercle statistique (28) est agencé pour déterminer de manière correspondante, en fonction d'une longueur du texte à déterminer, si une, deux ou plusieurs distribution(s) de fréquence ($h_1(x)$, $h_2(x,y)$, $h_3(x,y,z)$) de lettres et de groupes de lettres se trouvent dans le texte.

**15.** Dispositif de communication selon la revendication 14, **caractérisé en ce que** dans le module à synthèse vocale (15) sont mémorisées des règles d'énonciation pour différentes langues.

**16.** Dispositif de communication selon la revendication 15, **caractérisé en ce que** dans le module à synthèse vocale (15) est prévu un cercle de sélection de règles d'énonciation (21), relié au module d'identification de langue (23) et qui, en fonction de la langue transmise par le module d'identification de langue (23), sélectionne la règle d'énonciation correspondante, de manière que celle-ci puissent être utilisée par une unité de synthèse vocale (17) du module de synthèse vocale (15).

**17.** Dispositif de communication selon la revendication 14, 15 ou 16, **caractérisé en ce que** le module d'identification de langue (23) comprend un cercle de filtrage (26), pour éliminer d'une succession de caractères d'un texte, jusqu'au caractère vide, tous les caractères qui ne sont pas des lettres.

**18.** Dispositif de communication selon l'une des revendications 14 à 17, **caractérisé en ce que** le module d'identification de langue (23) comprend un cercle statistique (28), pour déterminer une distribution de fréquence ($h_1(x)$, $h_2(x,y)$, $h_3(x,y,z)$) de lettres dans le texte.

**19.** Dispositif de communication selon l'une des revendications 14 à 18, **caractérisé en ce que** le module d'identification de langue (23) présente un cercle comparateur (34), pour comparer, pour la détermination de facteurs de similitude ($s_1$, $s_2$, $s_3$) pour un texte, des distributions de fréquence ($h_1(x)$, $h_2(x, y)$, $h_3(x, y, z)$) déterminées de lettres avec des distributions de fréquence ($l_1(x)$, $l_2(x,y)$, $l_3(x,y,z)$) mémorisées correspondantes de langues disponibles.

**20.** Dispositif de communication selon la revendication 19, **caractérisé en ce que** le module d'identification de langue (23) comprend un cercle d'évaluation (36), auquel peuvent être amenés les facteurs de similitude ($s_1$, $s_2$, $s_3$) du

cercle comparateur (34), pour fixer la langue en tant que langue du texte pour laquelle le facteur de similitude ($s_1$, $s_2$, $s_3$) déterminé est maximal.

Fig.1

Fig.2

Fig. 3

Fig. 4